# EUROPEAN PATENT APPLICATION

(11) **EP 1 022 681 A1**
(43) Date of publication of application: **26.07.2000**
(21) Application number: 98911099.4
(22) Date of filing: 30.03.1998
(51) Int. Cl.: G06T 7/00

(54) **INFORMATION RECORDER/PROCESSOR AND EQUIPMENT/SYSTEM CONTROLLER BOTH PROVIDED WITH FINGERPRINT SENSOR**

(71) Applicant: HEARTLAND FORAGE INC., Wykoff, MN 55990 (US)
(72) Inventor: TAMORI, Teruhiko, Iruma-shi, Saitama 358-0026 (JP)
(74) Representative: Lawrence, John Gordon
(86) International application number: JP9801440
(87) International publication number: WO9950794

(57) **Abstract**

The first objective of the present invention is to provide a thin, lightweight and compact information recording/processing device with a user verification function. The second objective is to provide a machine/system control device that is capable of limiting, controlling, or managing the functioning and operation of the machine or system according to user-specific information after authenticating the user through verification of a fingerprint.

To achieve the above-mentioned objectives, the newly invented device is provided with a surface pressure input type thin fingerprint sensor, a memory unit in which the fingerprint data of users are pre-recorded, and a fingerprint matching unit in which the data of the newly input fingerprint data is compared with pre-registered fingerprint data. In addition to this, personal information specific to all users whose fingerprint data have been registered is kept ready so that when there is a match of the fingerprints, the operation or functions of the machine/system can be limited or controlled according to the personal information.

## Description

### Technical Filed

The present invention deals with information recording/processing devices and machine/system controlling devices that are equipped with fingerprint sensors.

### Background Art

Certain systems and machines require highly restricted operation and management in which unauthorized use is to be prevented and secrecy of the information being handled is to be ensured. The identity of the persons who operate the system/machine (hereinafter referred to simply as users) becomes an important factor. Traditionally, certain codes, passwords, ID numbers, etc., that are specific to the user, have been employed. However, long code numbers are difficult to remember, whereas short ones are easily deciphered, and the passwords and ID numbers are always at risk of being found out by others. Even codes are not completely immune from being deciphered by others, and it is generally considered that a fool-proof and perfect method can not be found.

In recent years, however, "fingerprints", which every individual is born with and which have the characteristics of being unique to each individual and permanent, are drawing greater attention as a means of identifying a person, a method which does not have the above-mentioned shortcomings. For example, Japanese Patent Unexamined Publication No. 6-274759 (274759/1994) and Japanese Patent Unexamined Publication No. 10-21400 (21400/1998) describe fingerprint matching systems that compare a fingerprint input by a user of the system or machine with pre-registered fingerprints of authorized users, and allow the user to operate the device if there is a match that confirms the identity of the user. This type of fingerprint-based user identification system is sufficiently effective for many applications.

The detecting or reading of the fingerprint is however done optically in conventional fingerprint matching systems, i.e., light is shone on the fingerprint and the reflected light is received by photoelectric elements such as CCDs and converted into electrical signals. These systems are readily affected by the presence of sweat, dirt, moisture, etc. and also by external light in the case of outdoor applications, besides having other problems like limitations in the environment and mode of application and difficulty in miniaturization because of the requirement of a light source, mirror, prism, etc.

Presently, there is a trend for many systems and devices to provide increased performance with a greater number of functions, and for the user to be one or several individuals including the owner, depending on the application. This has made it desirable to select or limit the functions or to change the particulars of processing or management depending for instance on the age of the authorized user or the status of other users. To do this with conventional systems and machines, the user or persons other than the user have to set or change the desired conditions depending on the requirement either before operating the system or during its operation, which is quite cumbersome. If the data about the use of the system or machine by each user is available, this is often very convenient for management, but with conventional systems, separate operation or processing is required for this.

### Disclosure of Invention

The first objective of the present invention is to provide a thin, light weight and compact information recording/processing device which has a user identification function, taking note of the availability of thin fingerprint detectors that are different from the conventional optical type detectors.

A second objective is to provide a machine/system control device that can verify the identity of the user with the help of a fingerprint and limit or control the operation or functions of the concerned system/machine or manage it, depending on the fingerprint offered for verification.

In the present invention, to achieve the first objective described above, a thin fingerprint sensor that detects fingerprints and a conversion unit that converts the fingerprint data detected by the sensor into digital electric signals are provided in a flat information recording/processing device.

In addition to this, the flat information recording/processing device can be provided with a thin fingerprint sensor that detects fingerprints, a memory unit that stores fingerprint data that is detected by the fingerprint sensor as registered fingerprint data, and a fingerprint matching unit that matches the registered fingerprint data stored in the memory unit with the offered fingerprint data detected by the fingerprint sensor.

Moreover, a thin fingerprint sensor that detects fingerprints, a memory unit that stores fingerprint data that is detected by the fingerprint sensor as registered fingerprint data, and a fingerprint matching unit that matches the registered fingerprint data stored in the memory unit with the offered fingerprint data detected by the fingerprint sensor can be provided in the flat type information recording/processing device and the system so structured that when there is a match of the fingerprint, an output signal indicates that there is a match.

To achieve the second objective, the device or system is provided with a fingerprint sensor that detects fingerprints, a fingerprint matching unit that matches the pre-registered fingerprint data stored in the memory unit with the offered fingerprint data detected by the fingerprint sensor, and a control mechanism that controls the operation or the function of the machine or system on the basis of the specific information about the user identified by the fingerprint, when there is a fingerprint match.

Alternatively, the machine or system is equipped with a fingerprint sensor that detects fingerprints, a first memory unit that stores fingerprint data that is detected by the fingerprint sensor as registered fingerprint data, a fingerprint matching unit that matches the pre-registered fingerprint data stored in the memory unit with the offered fingerprint data detected by the fingerprint sensor, and a control mechanism that controls the operation or the function of the machine or system on the basis of the specific information about the user identified through the fingerprint, when there is a fingerprint match.

### Brief Description of the Drawings

Figure 1 (a) depicts a driver's license that is an example of an information recording/processing device, which is a first embodiment of the present invention, and Figure 1 (b) depicts a portable read/write device that reads the information stored on the license and writes new information on it.
Figure 2 is an exploded perspective view of an example of the thin fingerprint sensor used in the newly invented information recording/processing device and machine/system control device.
Figure 3 is a block diagram of the license and the portable read/write device showing its functional configuration.
Figure 4 is a side view of a car illustrating the concept of a driving system that is an example of the second mode of application of the present invention.
Figure 5 is a block diagram of the car driving system.
Figure 6 is a flow chart illustrating the functioning of the car driving system of Figure 5, (a) is the flow chart of the door unlocking function, and (b) is the flow chart of the vehicle speed control function.

### Best Mode of Carrying Out the Invention

We shall now explain the present invention with reference to the drawings.

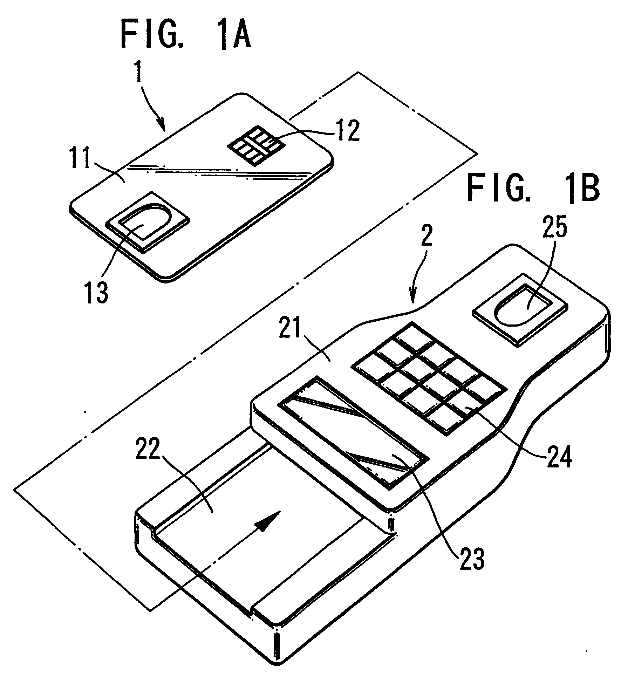

Figure 1 (a) shows the external appearance of a driver's license that is an example of an information recording/processing device which is a first embodiment of the present invention, and Figure 1 (b) shows the external appearance of a portable read/write device that reads the information stored on the license or writes new information to it.

The driver's license **1**, which is the information recording unit, has an IC memory embedded in the case **11** preferably made of plastic, a part of its surface has an exposed terminal **12** for connecting with an external terminal, and it has a fingerprint sensing module **13** through which the fingerprint of the owner is input.

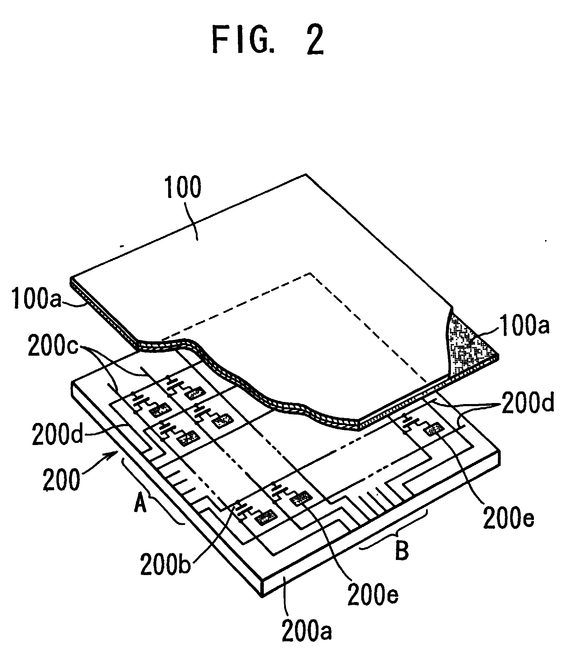

The portable read/write device **2**, which is the information processing unit, is in the possession of a person (like a police officer) with the authority to inspect or modify the information in the license, and the front upper surface of the plastic case **21** has a slot **22** into which the license **1** is inserted. The central upper part of this casing has a liquid crystal display unit **23** that displays the information stored in the license or information that will be written on it, the rear part of the casing has the keys **24** used for inspection, reading, or writing of information on the license, and the rear end of the casing has a fingerprint sensor module **25** for inputting fingerprints. The fingerprint sensor modules **13** and **25** have thin surface pressure input panels, for instance, of the type described in Japanese Patent No. 2,557,795, the disclosure of which is incorporated by reference. This surface pressure input panel may preferably be an active matrix type display system in which thin film transistors (TFTs) drive the liquid crystals. The panel has a configuration of the type shown in Figure 2, with a pressure sheet **100**, preferably formed by vapor deposition of a conductive film **100a** on the back side of an insulator film made of a material like PET (polyethylene terephthalate), placed over a circuit board **200**. The circuit board **200** preferably has an amorphous silicon film formed on an insulator base plate **200a** preferably made of glass, ceramic, etc., a number of TFTs ( thin film transistors) **200b**, drain wires **200c** and gate wires **200d** formed by a well-known photo-lithographic technique, and conductive contact plates **200e,** made of ITO (indium tin oxide) for instance, formed by vapor deposition. The drain wires **200c** and gate wires **200d** are arranged in a matrix pattern and function as scanning electrode wires when a scanning signal is applied, as will be explained later. Because the suitable gap for the drain wires **200c** and gaffe wires **200d** is 20-100 microns for fingerprint detection, a number of unit detection elements with the drain and gate of each TFT connected to the drain wire **200c** and gate wire **200d** respectively and the source connected to the conductive contact plate **200e** are preferably formed on the circuit board **200**. The drain wires **200c** and the gate wires **200d** are respectively gathered at sites **A** and **B** of the insulation base plate **200a** which are connected to an external circuit connector not shown in the Figure, as would be known by those of ordinary skill in the art.

A panel with 15 x 15 mm area for pressing the finger tip and thickness 1 mm has been prepared and used as the fingerprint sensor module with the structure described above. When a finger is placed on this surface pressure sensor panel and the panel pressed lightly, the electrically conductive contact plate **200e** of the unit detector element located exactly below or almost below a ridge of the fingerprint becomes electrically connected with the conductive film **100a** on the backside of the pressure sheet **100**. However, the electrically conductive contact plate **200e** of a unit detector element exactly below or near a valley of the fingerprint does not become electrically connected with the conductive film **100a**. So, when an x-direction resistor is connected to the drain wires **200c** and a y-direction resistor is connected to the gate wires **200d** and scanning signals are applied sequentially from each resistor at certain separate timings, the ridges and the valleys at the position of each unit detection element can be detected and thus the fingerprint pattern as a whole can be sensed.

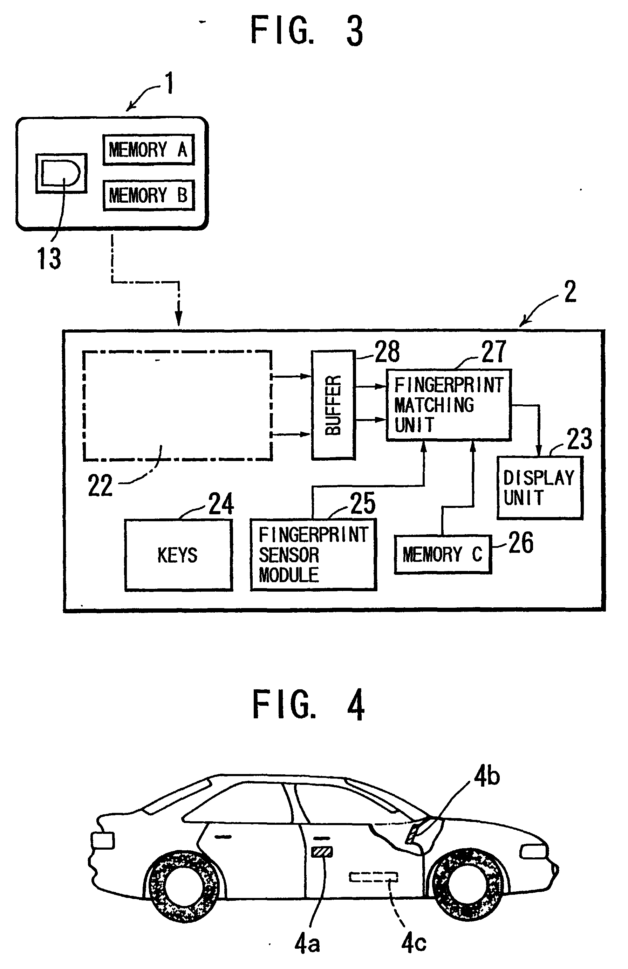

Figure 3 is a block diagram of the license 1 and the portable read/write device 2 showing the functional configuration.

The license **1** has a memory **A** where the fingerprint data of the owner may be preferably stored and a memory **B** in which the address, name, sex, and date of birth of the owner, the category of license, history of accidents (nature of the accidents and places and dates of occurrence) and the current points score, etc. that are specific to the owner of the license may be preferably maintained. Memories **A** and **B** are preferably IC memories. The specific information about the owner of the license is preferably stored in the memory **B** before issuing the license **1**.

Apart from the earlier mentioned display unit **23**, keys **24**, and fingerprint sensor module **25**, the portable read/write device **2** has a memory **C 26**, which stores the fingerprint data of a person (a police officer, for instance) who has authority to inspect or rewrite the information in the license, a matching unit **27** where the offered fingerprint data and the pre-registered fingerprint data are compared, and a buffer **28** where the data taken out from the license **1** is temporarily stored. We shall now explain how the above-described license system is used.

Police officers who are likely to use the portable read/write device **2** in the course of performing their duty register their fingerprint data and keep it the memory **C**. Now, if a traffic accident occurs, the police officer who deals with the accident turns on the power source (not shown in the Figure) of the portable read/write device **2** and inputs his fingerprint data by pressing his finger on the fingerprint sensor module **25**. The fingerprint matching unit **27** then compares the offered fingerprint with the fingerprint data in the memory **C**, and if there is a match, it confirms that the officer is indeed an authorized person, and assumes the standby condition, permitting the display unit **23** and the keys **24**, etc., to operate.

With the portable read/write device in this condition, the officer demands to see the driver's license, inserts it into the slot **22** of the read/write device **2** as indicated by the broken line in Figure **2**, and directs the driver to place his or her finger on the fingerprint sensor **13** of the license **1**. In this manner, the fingerprint data of the driver is taken into the buffer **28** of the read/write device **2**. The portable read/write device **2** reads out the fingerprint data of the driver from the memory **A** and specific information about the driver from memory **B** via the connecting terminal **12** of the license **1**, temporarily stores the data in these buffer **28**, and compares the fingerprint data offered through the fingerprint sensor **13** and that which reads out from memory **A** in the matching unit **27**, and verifies the identity of the owner and displays the specific information about the owner in the liquid crystal display unit **23** if there is a match.

The police officer inputs particulars about the accident by using the keys **24** and updates the points score, etc. This new information is displayed on the display unit **23** and stored in the memory **B** of the license **1**.

In the example described above, a liquid crystal driving panel was used as the fingerprint sensor module. However, a piezoelectric sensor panel in which the frequency of the piezoelectric film changes depending on the fingerprint pattern (Japanese Patent No. 2,557,796), a magnetic sensor panel in which the magnetic resistance changes (Japanese Patent No. 2,520,848), a system in which the contact resistance changes (Japanese Patent No. 2,069,288), a system in which the resistance changes by distortion, and other such thin surface pressure input sensor panels can be used. The method described in Japanese Patent No. 2,030,279, which employs the microprocessing technology generally used for producing semiconductor devices, can be employed for preparing the fingerprint sensor module.

In the above example, the fingerprint matching unit and the display unit are provided in the portable read/write device. But these may be provided in the license itself so that the personal information about owner of the license can be displayed on the display unit at the time of matching of the fingerprints. In that case, the power source and other necessary circuits need to be built into the license.

In the description given above we have used a license as an example of a portable card. However, the present invention can be applied With similar effect to other cards and booklets, such as a citizenship card issued by a country or a local government, pension booklets, health insurance certificates, passports, library cards, credit cards, etc.

Figure 4 is a conceptual diagram of a car driving system that is machine/system control device of the second mode of application of the present invention.

The car driving system consists of a remote controller **3**, a photocell **4a** for receiving infrared light installed on the outside of the driver's side door of the car, data input keys **4b** installed on the dashboard inside the car, and a control circuit **4c** attached below the console. The photocell **4a** which is meant for receiving data from the remote controller **3**, the data input keys **4b**, and the control circuit **4c** constitute the vehicle velocity control circuit.

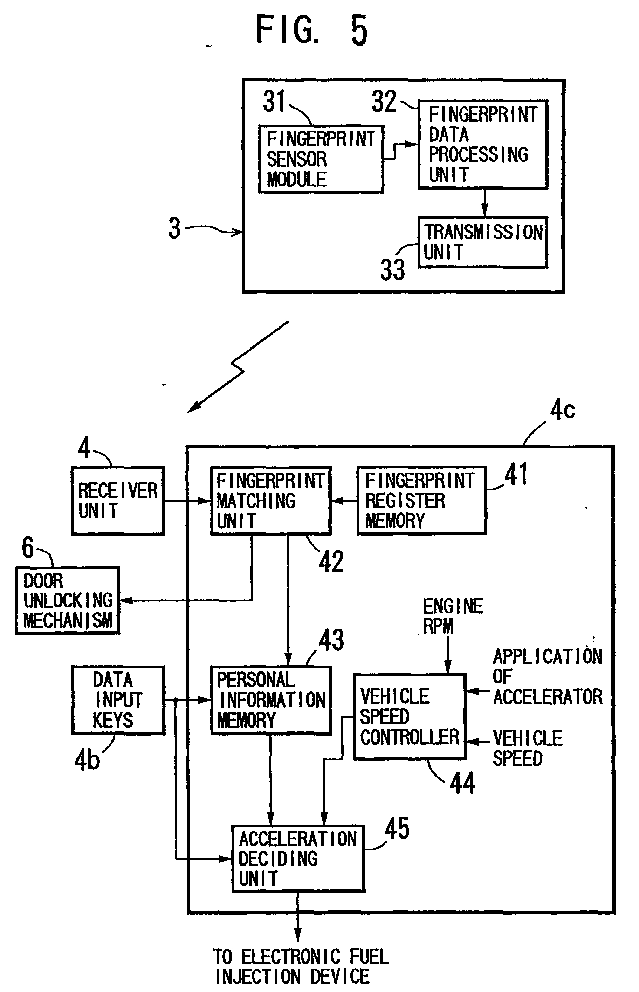

Figure 5 is a block diagram showing the configuration of the circuits of the car driving system. The remote controller **3** has a fingerprint sensor module **31** that detects fingerprint data when a finger is placed over it, a fingerprint data processing unit **32** that extracts the characteristic point called minutiae of the fingerprint from the detected fingerprint data, and a transmission unit **33** that sends out the minutiae data in the form of an infrared beam, and also a built-in battery for the power supply.

Apart from the liquid crystal driving type panel shown in Figure 2, piezoelectric, magnetic, contact resistance type or the like thin surface pressure input sensor panels can be used as the fingerprint sensor module **31**, as explained earlier for the first mode of application of the invention. Because of these features, a remote controller that is significantly smaller, thinner and lighter weight than conventional optical type fingerprint sensors can be created.

On the other hand, the receiver unit **4** on the main body of the car receives, through the photocell **4a**, the infrared beam transmitted by the remote controller **3** and outputs it as an electrical signal to the control circuit **4c**. The control circuit **4c** has as its components, a fingerprint registering memory **41** which is non-volatile memory like an E²PROM that remembers the minutiae data of the fingerprint of the driver (or drivers), a fingerprint matching unit **42** that compares an offered fingerprint with the fingerprints stored in the fingerprint register memory **41**, a personal information memory **43** that remembers information specific to the driver (name, sex, age, license number, category of the license, upper speed limit, etc.), a vehicle speed controller **44** that monitors the engine RPM, the extent to which the accelerator has been pressed and the vehicle speed, and outputs the acceleration signal, and an acceleration deciding unit **45** which decides whether to permit acceleration or not, on the basis of driver-specific personal information. The personal information of each driver and the minutiae data of his or her fingerprint are registered beforehand through the data input keys **4b**.

We shall now explain the functioning of the car driving system having the structure described above.

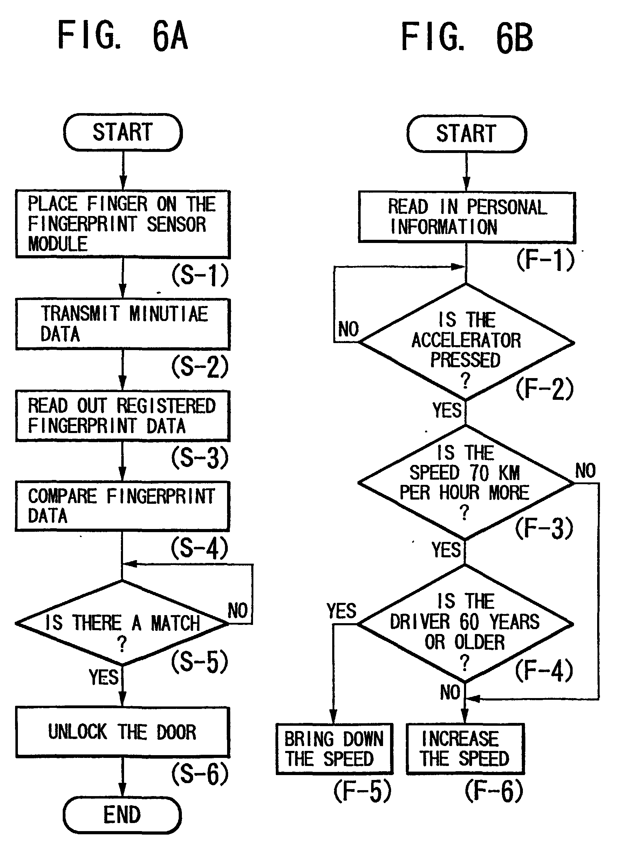

Figure 6 shows a flow chart illustrating the functioning of the car driving of this system. Figure 6(a) is the flow chart of the door unlocking action and 6(b) is the flow chart of the vehicle speed control function.

At the start of driving, the driver places his or her finger on the fingerprint sensor module **31** while aiming the remote controller **3** at the receiver photocell **4a** on the driver's side door of the car (S-1). When the finger is placed on the sensor module, power supply to the remote controller **3** starts automatically, and the transmission unit **33** of the remote controller **3** transmits the minutiae data of the fingerprint in the form of an infrared beam (S-2).

When the receiver photocell **4a** on the door of the car, the power source of which is always on, receives the infrared beam, power is supplied to the fingerprint register memory **41** and the fingerprint matching unit **42** and at the same time the minutiae point data is converted into an electrical signal and transmitted to the fingerprint matching unit **42** of the control circuit **4c**. The fingerprint matching unit **42** reads out the minutiae data of the fingerprints of registered drivers kept in the fingerprint register memory **41** (S-3) and compares them with the minutiae data of the fingerprint received from the remote controller **3** (S-4). If there is a match, the system assumes that the driver has been authenticated (5-5) and outputs the door unlocking signal to the door unlocking mechanism **6,** and then the door on the driver's side is unlocked (S-6).

The system is made so that when the door is unlocked, power is supplied to the whole of the control circuit **4c** and the personal information stored in the memory **43** about the driver who has been authenticated by the fingerprint matching is read into the acceleration deciding unit **45** (F-1).

When the engine is started after this, power is supplied to the vehicle speed controller 44 of the control circuit **4c** and the vehicle starts running through the standard procedures for driving. While the car is running, the engine rpm, car speed, and the extent to which the accelerator has been applied are detected and fed into the vehicle speed controller **44** (F-2), and the vehicle speed controller **44** outputs an acceleration signal calculated from this information using a pre-determined formula or table.

The acceleration deciding unit **45** outputs a vehicle speed limiting signal when the vehicle speed signal output from the speed controller **44** exceeds the driving speed limit fixed for that driver (for example, the upper limit may be fixed at 70 kph for a driver **A** who is 60 years or older) (F-3 and F-4). This speed limiting signal is led to an electronic fuel injection control device and the vehicle velocity is maintained below the limit (at not more than 70 kph) by cutting down the amount of fuel injected into the engine (F-5). If the speed of the car is less than 70 kph, it is increased by ordinary throttling controller (F-6). Thus, in this mode of applying the present invention, after fingerprint verification, not only is the door unlocked, but the speed of the car is automatically controlled below a certain pre-fixed level on the basis of the personal information about the user to whom the fingerprint belongs. Therefore, the system is free from the cumbersome process of having to reset the upper driving speed limit every time.

In the above-described Mode 2 of applying the present invention, the fingerprint register memory **41** which is used for storing the fingerprints of the drivers, and the fingerprint matching unit **42** are located in the control circuit **4c** in the car. But alternatively they can be located in the remote controller **3** and matching can be done in the remote controller.

Apart from the above-described example, the following applications are possible examples of limiting or controlling the operation of machines or systems after the verification of the person through a fingerprint.
(1) Applications in which access is limited or the functions are limited or controlled: Personal computers, Internet communication devices, multimedia terminals, digital broadcast receiver-decoders, digital recorders, videotape recorders, digital cameras, copiers, game machines, portable terminals, domestic telephones, and electronic clinical charts.
(2) Applications in which data are gathered or memorized, and dealt with differently depending on the identity of the individual: telephones, game machines, cash dispensers, ATMs, automatic coin operated dispensers, home banking systems, pinball game card terminals, money-related electronic equipment (electronic cash dispensers, electronic balance display machines, electronic wallets, and electronic safes), and POS terminals.

In the newly invented electronic information recording/processing devices and machine and system control devices equipped with non-optical thin surface pressure input type fingerprint sensors, the user is verified by fingerprint matching. As such, they have a number of advantages, including improved security such as prevention of unauthorized use or impersonation by persons who resort to theft or fraud, the elimination of the risk of counterfeit passwords, the need to remember a code or ID, or the risk of being decoded by computers, etc., unlike conventional devices which use code numbers, passwords, or IDs. Apart from this, the newly invented devices have the advantages mentioned below.
(1) In the newly invented information recording/processing devices equipped with thin surface pressure input type fingerprint sensors, the fingerprint sensor itself is very thin, lightweight and compact. As such, it is convenient as a portable device. If they can be incorporated into IC's they can be used in citizen's or social security cards issued by a national or local government, pensioner's booklets, health insurance card, passports, library cards, credit cards, and other similar cards and records. Even if such a card is lost, there is no risk of its being used by an unauthorized person.
   Although these are not as thin as IC cards, because they are small in size, lightweight and compact; they can be used in remote controllers or terminals of various electronic devices and consumer apparatuses.
   If a display unit is provided in the above-described card, booklet, or terminal, the data stored inside can be used freely at any time, by the user or by authorized persons, off line.
(2) In the newly invented information machine/system control device equipped with a thin surface pressure input type fingerprint sensor, the fingerprint sensor itself is extremely thin, light and compact. As such, the sensor can be implemented without modifying the design or structure of the device. Another major advantage is that access to the machine or system operated by a user can be limited, the functions and operations of the system can be limited or controlled, and collection and management of the data about the use of the system can be automatically accumulated, all in relation to the individual information such as sex, age, the organization to which the person specified by the fingerprint belongs, etc. Therefore, there is no need to separately set the conditions of use or to tally the data every time.
(3) The fingerprint sensor used in Mode 2 of applying the present invention need not be a thin surface pressure input type fingerprint sensor in certain applications (game machines placed at game centers and cash dispensers in banks, for example) as long as it serves the purposes of user identification and data collection and storage.

### Industrial Applicability

The present invention can also be effectively used in a portable small lightweight unit such as a card, terminal, etc. in devices that require user verification. After verifying the user, the operation or functions of the apparatus can be limited or controlled.

## Claims

1. A flat information recording/processing device that is characterized by having a thin sensor for detecting fingerprints and a conversion unit that converts the fingerprint data detected by the fingerprint sensor into digital electrical signals.

2. A flat information recording/processing device that is characterized by having a thin sensor for detecting fingerprints, a memory unit that stores the fingerprint data detected by the sensor as registered fingerprint data, and a fingerprint matching unit that compares newly detected fingerprint data with the registered fingerprint data stored in the memory.

3. A flat information recording/processing device that is characterized by having a thin sensor for detecting fingerprints, a memory unit that stores the fingerprint data detected by the sensor as registered fingerprint data, and a fingerprint matching unit that compares newly detected fingerprint data with the registered fingerprint data stored in the memory and outputs a "Yes" signal when there is a match of the fingerprints in the comparison.

4. A flat information recording/processing device described in one of the claims 1-3 above and which is characterized by having a second memory unit in which specific information about each user is stored.

5. A flat information recording/processing device described in one of the claims 1-4 above in which the fingerprint sensor is a surface pressure input type sensor.

6. A flat information recording/processing device that has a portable information recording unit equipped with a thin sensor for detecting fingerprints, a first memory unit that stores the fingerprint data detected by the sensor as registered fingerprint data and a second memory unit in which user-specific information is kept, and an information processing unit that is equipped with a fingerprint matching unit that compares newly detected fingerprint data with the registered fingerprint data stored in the first memory unit and a display unit that displays the user-specific information stored in the above-mentioned second memory unit and information processing unit which can display the above information in the above display when there is a match of fingerprints.

7. The information recording/processing unit described in claim 6 above in which the information processing unit is capable of reading out, writing in, and rewriting the information stored in the second memory unit of the information recording unit.

8. The information recording/processing unit described in claim 6 or 7 above in which the information processing unit is further equipped with a second thin fingerprint sensor for detecting fingerprints and a third memory unit that stores the fingerprint data detected by the second fingerprint sensor as registered fingerprint data.

9. A machine/system control device that is characterized by having a fingerprint sensor for detecting finger prints, a fingerprint matching unit that compares fingerprint data detected by the above-mentioned sensor with pre-registered fingerprint data, and a control mechanism that controls the functions or operation of the machine/system according to the user-specific information specified by the fingerprint, when there is a match of fingerprints.

10. A machine/system control device that is characterized by having a fingerprint sensor for detecting fingerprints, a first memory unit that stores the fingerprint data detected by the sensor as registered fingerprint data, a fingerprint matching unit that compares fingerprint data detected by the above-mentioned sensor with the registered fingerprint data stored in the memory unit, and a control mechanism that controls the functions or operation of the machine/system according to the user-specific information specified by the fingerprint, when there is a match of fingerprints.

11. A machine/system control device that is specified in claim 9 or 10 above in which the user-specific information is age.

12. A machine/system control device that is specified in claim 9, 10 or 11 above in which the fingerprint sensor is a surface pressure input type fingerprint sensor.
